# EUROPÄISCHE PATENTSCHRIFT

(11) **EP 1 622 460 B1**
(45) Veröffentlichungstag und Bekanntmachung des Hinweises auf die Patenterteilung: **16.09.2009**
(21) Anmeldenummer: 04730865.5
(22) Anmeldetag: 03.05.2004
(51) Int. Cl.: A22C 13/00

(54) **FETTDICHTER TEXTILDARM**
FAT-RESISTANT TEXTILE GUT
BOYAU TEXTILE IMPERMEABLE AUX GRAISSES

(30) Priorität: 05.05.2003 DE 10320168
(43) Veröffentlichungstag der Anmeldung: 08.02.2006
(73) Patentinhaber: Kalle GmbH, 65203 Wiesbaden (DE)
(72) Erfinder: WOLF, Peter, 49179 Ostercappeln (DE)
(74) Vertreter: Plate, Jürgen
(86) Internationale Anmeldenummer: PCT/EP2004/004645
(87) Internationale Veröffentlichungsnummer: WO 2004/098299

(56) Entgegenhaltungen:
- EP-A- 0 166 226
- EP-A- 0 710 443
- DE-A- 4 141 924
- DE-A- 19 942 835

## Beschreibung

Die Erfindung betrifft einen Textildarm mit mindestens einer Längsnaht, ein Verfahren zu dessen Herstellung sowie seine Verwendung als Nahrungsmittelhülle, speziell als künstliche Wursthülle.

Nahrungsmittelhüllen aus Textilmaterial sind bereits bekannt. Sie bestehen beispielsweise aus einem eiweißbeschichtetem Gewebegerüst. Dabei wird zunächst ein (nahtloser) textiler Hohlschlauch aus Baumwoll-, Kunststoff- oder Seidenfäden hergestellt. Dieser wird in bestimmte Längen geteilt, die dann auf ein Druckluft führendes Rohr aufgezogen werden. Von dort werden die Teillängen durch eine Vorrichtung geführt, in der eine Kollageneiweißmasse auf die Oberfläche des Schlauches aufgetragen wird. Die Auftragsmenge wird so bemessen, daß die Lücken im Gewebe geschlossen werden. Überschüssige Eiweißmasse wird mit einer Rakel abgezogen. Der eiweißbeschichtete Gewebegerüstdarm ist durchlässig für Wasserdampf und eignet sich daher für die Herstellung von schnittfesten Rohwurstsorten (G. Effenberger, Wursthüllen - Kunstdarm, 2. Aufl. [1991], Holzmann Buchverlag, Bad Wörishofen, S. 25 und 106 - 108).

Bekannt sind auch räucherbare acrylatbeschichtete Textildärme (DE-A 31 47 519). Das darin verwendete textile Grundmaterial kann ein verfestigtes Vlies, ein Spinnvlies oder ein Gewebe aus Naturfasern und/oder Kunstfasern sein. Erwähnt sind Fasern aus Baumwolle, Leinen, Wolle, Seide, Celluloseester, Regeneratcellulose, Polyester, Polyamid, Polyacrylnitril, Polypropylen und Polyvinylchlorid. Beschichtet ist das Grundmaterial mit einem Acrylat-Emulsionspolymerisat auf Basis von lipophilen Estern der (Meth)acrylsäure mit niederen Alkanolen, insbesondere von Butylacrylat. Aufgetragen wird die Beschichtung mit Hilfe von üblichen Beschichtungsvorrichtungen, wie Luftrakel, Walzenrakel, Gummituchrakel usw. Durch entsprechende Wahl der Beschichtung kann der acrylatbeschichtete Textildarm wasserdampf- und gasdurchlässig eingestellt werden, so daß er auch für Dauerwurst geeignet ist.

In der DE 41 41 924 A1 ist eine fettdichte, zweischichtige Nahrungsmittelhülle mit einer textilen Trägerschicht und einer damit verklebten Kunststoff-Folie offenbart.

Zum Verkleben wird ein Schmelzkleber eingesetzt, der in einem Punktraster aufgebracht wird und dessen Schmelzpunkt unter dem des Folienmaterials liegt. Die Folie besteht vorzugsweise aus Polyolefin. Schlauchförmige Hüllen aus dem zweischichtigen Material, noch dazu solche mit einer Längsnaht, sind nicht konkret beschrieben.

Ein wesentlicher Nachteil der bekannten Textildärme besteht darin, daß sie nicht fettdicht sind. Textildärme werden häufig für streichfähige, gegebenenfalls kalt geräucherte Rohwürste mit einem sehr hohen Fettanteil verwendet. Insbesondere im Bereich der Naht dringt dann Fett nach außen, was sich beim Anfassen der Wurst unangenehm bemerkbar macht. Wegen der unzureichenden Dichtheit können darüber hinaus Mikroorganismen (z.B. Listerien) auf das Wurstbrät gelangen und es verderben.

Eine bedingt räucherfähige künstliche Wursthülle in Naturdarmform ist in der DE-A 199 42 835 offenbart. Sie wird aus zwei entsprechend geformten Flachfolien hergestellt, die übereinandergelegt und an den Rändern geklebt, vernäht oder verschweißt werden. Die Folien selbst bestehen vorzugsweise aus Niederdruck-Polyethylen. Über das Kunststoffmaterial der Hülle kann nach dem Verschweißen ein Stützmaterial gezogen werden. Das Hüllenmaterial ist nicht mit dem Stützmaterial verbunden. Textile Materialien sind nicht beschrieben, auch nicht für das Stützmaterial.

Es bestand daher die Aufgabe, die bekannten Textildärme so zu verbessern, daß sie fettdicht werden und somit auch für Nahrungsmittel mit einem hohen Fettanteil einsetzbar sind. Der zu entwickelnde Kunstdarm soll darüber hinaus möglichst undurchdringlich für Mikroorganismen sein. Je nach der vorgesehenen Verwendung soll er durchlässig oder undurchlässig sein für Wasserdampf, Sauerstoff und/oder Rauchbestandteile. Er soll zudem über eine ausreichende mechanische Stabilität verfügen und sich auch in gebogenen oder unregelmäßigen, naturdarmähnlichen Formen erzeugen lassen.

Gelöst wurde die Aufgabe durch einen Textildarm mit mindestens einer Längsnaht, der dadurch gekennzeichnet ist, daß er ein Textilmaterial und eine fettdichte Folie umfaßt, wobei die Folie mit der Innenseite des Textilmaterials derartig flächig verbunden ist, daß sie über die Längsnaht und den Rand des Textilmaterials einen Überstand bildet und im Bereich des Überstands fettdicht verschlossen ist. Es wird somit ein Textildarm zur Verfügung gestellt, der auch dort effektiv abgedichtet ist, wo das Textilmaterial mit einer genähten Naht verbunden ist. Ein Austritt von Fett, Wasser oder anderen Bestandteilen des Nahrungsmittels läßt sich so zuverlässig verhindern.

Die Längskanten der Innenfolie ragen stets über das Textilmaterial hinaus, so daß sie durch Siegeln, Kleben, Kalt- oder Heißverschweißen oder nach anderen Fügeverfahren fest und fettdicht miteinander verbunden werden können.

In einer bevorzugten Ausführungsform weist der Textildarm zwei Längsnähte auf. Die innenliegende Folie ist zweckmäßig ebenfalls aus zwei Hälften zusammengesetzt, die an den überstehenden Längskanten jeweils fettdicht miteinander verbunden sind.

Das Textilmaterial umfaßt als Grundmaterial ein Gewebe, Gewirke, verfestigtes Vlies oder Spinnvlies aus Naturfaser, synthetischen Fasern oder Gemischen davon. Geeignete Naturfasern sind beispielsweise Baumwollfasern, Cellulosefasern (beispielsweise Leinen), Wolle oder Seide. Geeignete synthetische Fasern sind beispielsweise aus Polyamid, Polyester, Polyolefin (speziell Polypropylen), Regeneratcellulose (= Zellwolle), Polyvinylacetat, Polyacrylnitril oder Polyvinylchlorid bzw. aus den entsprechenden Copolymeren hergestellt. Besonders bevorzugt ist ein dünnes, in Längs- und Querrichtung verstrecktes Gewebe aus Baumwolle, Zellwolle oder einem Gemisch von Baumwolle und Polyester, Baumwolle und Zellwolle oder Zellwolle und Polyester. Es hat bevorzugt ein Flächengewicht von 8 bis 300 g/m², bevorzugt 20 bis 150 g/m², besonders bevorzugt 45 bis 120 g/m².

Vorzugsweise ist das Grundmaterial auf einer oder auf beiden Seiten beschichtet (auch tauchbeschichtet = foulardiert) oder auf sonstige Weise oberflächenbehandelt. Dafür eignen sich besonders Acrylatharze und Kunststoff-Blends, speziell Emulsionspolymerisate auf Basis von (C₁-C₆)Alkyl(meth)acrylaten, insbesondere Butyl(meth)acrylat. Der Begriff (Meth)acrylat steht dabei wie üblich für Acrylat und/oder Methacrylat. Einheiten aus anderen Monomeren können hinzutreten, beispielsweise solche aus Styrol, α-Methyl-styrol oder Vinylacetat.

Der Anteil der Einheiten aus solchen anderen Monomeren sollte 25 Gew.-%, bevorzugt 15 Gew.-%, nicht überschreiten. Geeignete Acrylatharze sind dem Fachmann bekannt, insbesondere aus der DE-A 31 47 519. Zum Beschichten des Grundmaterials geeignet sind ferner Polyvinylacetate, Silikon-Dispersionen, Mischungen von Acrylaten mit Polyvinylacetaten, Mischungen von Silikonen mit Acrylaten und Polyvinylacetaten sowie auch Viskose, die dann anschließend zu Cellulose regeneriert wird, und andere Beschichtungsflüssigkeiten, die Cellulose in derivatisierter oder nicht derivatisierter Form enthalten, wobei diese gegebenenfalls abgemischt sind mit Acrylaten. Das Grundmaterial kann alternativ mit Kollagenfasern, speziell mit Rinderkollagenfasern, beschichtet sein. Ein bereits mit Acrylat beschichtetes Material kann noch zusätzlich mit Kollagen beschichtet werden. Die Dicke der Beschichtung wird so gewählt, daß die für die Reifung der Wurst erforderliche Wasserdampf- und Sauerstoffdurchlässigkeit noch gegeben ist. Es können auch mehrere Schichten aufgetragen werden. Geeignete Verfahren und Vorrichtungen zum Beschichten sind dem Fachmann prinzipiell bekannt. Die Beschichtung kann praktisch alle Zwischenräume zwischen den Fasern ausfüllen. Um ein besonders "textiles" Erscheinungsbild zu erzielen, sind gegebenenfalls nicht alle Zwischenräume zwischen den Fasern ausgefüllt. Das Grundmaterial wie auch das zum Beschichten bzw. Imprägnieren verwendete Material kann durch Farbstoffe und/oder Farbpigmente eingefärbt sein. Anstelle davon oder auch zusätzlich kann das beschichtete bzw. imprägnierte textile Flachmaterial noch bedruckt werden, bevorzugt in einem Flexodruckverfahren.

Während oder nach dem Beschichten wird das Grundmaterial zweckmäßig in Längs- und Querrichtung verstreckt. Das Ausmaß der Verstreckung ist abhängig unter anderem vom Flächengewicht, von der Konstruktion und von der Art des Materials. Das Flächenstreckverhältnis beträgt allgemein 1 bis 20 % in Längs- und Querrichtung, bevorzugt 3 bis 15 %, jeweils bezogen auf das Rohwarenmaß. Bei einem leichten Baumwoll- oder Zellwollgewebe oder einem Mischgewebe aus Baumwolle und Polyester, Baumwolle und Zellwolle oder Zellwolle und Polyester mit einem Flächengewicht von 45 bis 120 g/m² wird beispielsweise auf etwa 3 bis 5 % über der Ausgangslänge bzw. -breite verstreckt. Wird auf eine Verstreckung verzichtet, so bleibt das Textilmaterial besonders elastisch und eignet sich deshalb besonders zur Herstellung eines Textildarms für unregelmäßig geformte Produkte wie gekochte Pökelwaren, insbesondere Kochschinken.

Die Folie auf der Innenseite des erfindungsgemäßen Verbundmaterials ist eine ein- oder mehrschichtige Folie, bevorzugt eine heißsiegelfähige oder verschweißbare, besonders bevorzugt eine mono- oder biaxial verstreckte Folie.

Insbesondere handelt es sich um eine Kunststoffolie aus einem polyolefinischen Material, beispielsweise aus Polyethylen- oder Polypropylen (speziell Niederdruckpolyethylen). Da die Folie keinen starken mechanischen Belastungen ausgesetzt ist, kann sie relativ dünn sein. Als günstig hat sich eine Dicke von 5 bis 200 µm, bevorzugt von 8 bis 50 µm, besonders bevorzugt 10 bis 30 µm, erwiesen. Soll die erfindungsgemäße Hülle räucherbar sein, dann besteht die Folie zweckmäßig im wesentlichen aus einem quellbaren, polaren Polymer, beispielsweise einem Polyesteramid. Geeignet für eine räucherbare Hülle sind ferner Folien auf Basis von aliphatischen Polyamiden, beispielsweise solchen, die ein Gemisch aus aliphatischem (Co-)Polyamid und glykol- oder polyglykolmodifiziertem aliphatischem und/oder teilaromatischem (Co-)Polyamid enthalten. Der Begriff (Co-)Polyamid steht dabei für Polyamid und/oder Copolyamid. Durch Mittel, die kleine Blasen oder Vakuolen in der Folie hervorrufen (ohne dabei Löcher in der Folie zu verursachen, durch die Fett austreten könnte), läßt sich die Durchlässigkeit für Rauchbestandteile noch weiter steigern. Des weiteren sind Folien aus natürlichen Fasern, bespielsweise aus Kollagenfasern, geeignet. Schließlich können auch Folien aus - vorzugsweise eßbaren - natürlichen, hochmolekularen Substanzen wie Carrageenan, Alginat, Pullulan, Stärke, Stärkederivaten (z.B. Stärkeacetat), Protein (z.B. Casein) oder Polylactid eingesetzt werden.

Die Innenfolie ist in jedem Fall für den Kontakt mit dem Lebensmittel, speziell mit dem Wurstbrät, vorgesehen. Sie soll daher auch eine passende Bräthaftung sicherstellen, damit sich die Hülle einerseits beim Lagern nicht vom Wurstbrät löst, andererseits aber vom Verbraucher ohne Probleme abgezogen werden kann. Die Bräthaftung läßt sich beispielsweise beeinflussen, indem man die Oberfläche einer Kunststoffolie einer Corona-Behandlung unterzieht. Im Einzelfall kann es auch zweckmäßig sein, eine der üblichen Trenn- und/oder Haftpräparationen auf die Folie aufzubringen, um die Bräthaftung auf das richtige Maß einzustellen.

Das aliphatische Polyamid oder Copolyamid der Innenfolie ist bevorzugt Poly(ε-caprolactam), Polyhexamethylenadipamid, ein Copolyamid aus Hexamethylendiamin und Dodecandisäure (= PA 6.12) oder Polyamid 6/6.6.

In einer weiteren Ausführungsform ist auf einer Seite des textilen Flachmaterials eine Folie aufgebracht, z.B. durch Auflaminieren, Aufkleben oder Aufkaschieren. Diese Folie kann auch bedruckt sein, z.B. in einem Flexodruckverfahren. Sie wird dann zweckmäßig so auflaminiert, daß sich das Druckbild auf der Unterseite befindet und durch die - allgemein transparente - Folie hindurch sichtbar ist. Das hat den Vorteil, daß das Druckbild nicht verschmieren kann. Diese nur gegebenenfalls vorhandene Folie befindet sich in dem erfindungsgemäßen Verbund auf der Außenseite. Um den textilen Eindruck nicht allzu stark zu beeinträchtigen, sollte sie relativ dünn sein (etwa 5 bis 150 µm, bevorzugt etwa 20 bis 60 µm). Die Folie selbst kann aus praktisch beliebigem Material bestehen, beispielsweise aus Polyester, Polyamid (PA), Polyolefin und/oder EthylenNinylalkohol-Copolymere (EVOH) sowie üblichen Additiven. Sie kann unverstreckt oder verstreckt, ein- oder mehrschichtig sein. Die verstreckten Folien können auch schrumpffähig sein. Dreischichtige Folien haben beispielsweise einen Aufbau PA/(PE + Haftvermittler)/PA oder PA/EVOH/PA.

Die erfindungsgemäße Hülle kann unregelmäßige Konturen aufweisen und dadurch die Form eines Naturdarm imitieren, beispielsweise eines sogenannten Fettendes.

Herstellen läßt sich das erfindungsgemäße Verbundmaterial zweckmäßig nach einem Verfahren, das die folgenden Schritte umfaßt:
a) Bereitstellen eines gegebenenfalls beschichteten textilen Flachmaterials;
b) gegebenenfalls Bedrucken des Flachmaterials, beispielsweise in einem separaten Arbeitsschritt oder in einem in-line Verfahren. Bei einer transparenten Beschichtung kann das Flachmaterial auch vor dem Beschichten bedruckt werden. Es kann auch auf ein foulardiertes oder nur mit einem Grundstrich versehenes Flachmaterial gedruckt werden, beispielsweise in einem Kupfertief-, Sieb- oder Flexodruck-Verfahren.
c) Übereinanderlegen von zwei Bahnen aus dem gegebenenfalls beschichten textilen Flachmaterial, wobei die späteren Außenseiten des erfindungsgemäßen Verbunds aufeinander liegen, oder entsprechendes Falten des Flachmaterials in Längsrichtung. Die Bahnen können gerade, gebogene oder unregelmäßig geformte Ränder haben. In den beiden letztgenannten Fällen sind die beiden Bahnen spiegelbildlich zueinander geformt.
d) Verbinden der Längskanten des textilen Flachmaterials durch eine Naht, vorzugsweise eine genähte. Die Naht kann gerade, gebogen oder unregelmäßig verlaufen (z.B. um die Form eines Naturdarms zu imitieren). Sie kann beispielsweise eine Überwendlichstichnaht, eine Kettstich- oder Doppelkettstichnaht oder eine Steppstichnaht sein. Es kann auch eine einzige umlaufende Naht sein. Beim Nähen werden die Längskanten gegebenenfalls beschnitten, so daß aus einer durch Falten erzeugten geraden Kante eine abgenähte Kante mit weitgehend beliebiger Form erzeugt werden kann.
e) Bereitstellen einer fettdichten Folie.
f) Flächiges Verbinden jeweils einer Bahn aus der Folie mit der Ober- und der Unterseite des durch mindestens eine Naht verbundenen textilen Flachmaterials. Das Verbinden erfolgt beispielsweise durch Kleben, Siegeln (kalt oder heiß, mit oder ohne Hotmelt) Kaschieren oder Laminieren. Die Folie ragt dabei seitlich über das textile Flachmaterial hinaus. Soweit zweckmäßig oder erforderlich, kann die Bahn aus der Folie ebenfalls beschnitten werden, z.B. um ihre Form an die des textilen Flachmaterials anzupassen. Die Folie kann dabei auch vor dem Laminieren in die gewünschte Form, beispielsweise in die Form eines "Fettendes", geschnitten werden.
g) Verbinden der überlappenden Ränder der Folie miteinander. Dies kann - je nach Art der Folie - durch Heißsiegeln, Kleben, Schweißen oder auf andere Weise erfolgen. Die Schritte e) und f) können auch zu einem einzigen Schritt verbunden werden.
h) Gegebenenfalls Schneiden des erzeugten Verbundmaterials in Abschnitte, wobei ein Abschnitt jeweils einer Wurstlänge entspricht (bevorzugt etwa 10 bis 100 cm). Das Schneiden kann alternativ auch während des Füllens erfolgen.
i) Wenden der Abschnitte, so daß die Naht nach innen ragt und die Folie sich auf der Innenseite befindet. Das Wenden kann auch vor dem Schneiden erfolgen, d.h. vor dem Schritt h).
j) Gegebenenfalls Verschließen eines Endes eines jeden Abschnitts, beispielsweise durch einen Metallclip, eine Garnabbindung oder Ähnliches. Wenn die Folie siegelfähig ist, kann das Verschließen auch durch Verschweißen erfolgen. Das Ende wird dadurch fettdicht verschlossen. Damit verbunden werden kann eine Garnschlaufe oder ein anderer Aufhänger für eine Wurst.
k) Gegebenenfalls Raffen des Verbundmaterials zu einer Raffraupe.

Alternativ dazu kann auch ein Verbundmaterial erzeugt werden, bei dem das textile Flachmaterial nur auf einer Seite mit einer Längsnaht verbunden ist. Das Flachmaterial wird dann vorher entsprechend in Längsrichtung gefaltet. Anschließend kann dann wie beschrieben von beiden Seiten jeweils eine Folie aufgebracht und flächig verbunden werden. Die Seitenkanten der Folien werden miteinander verbunden. Dann wird das Verbundmaterial wie beschrieben umgestülpt.

Die nachfolgenden Beispiele dienen zur Erläuterung der Erfindung.

### Beispiel 1:

Ein 68/68-30/30(NE)-Gewebe aus einem Gemisch aus Baumwoll und Polyester (55:45 Gew.-%) mit einem Gewicht von 120 g/m² wurde mit Hilfe eines Rakels mehrfach mit einer Acrylat-Dispersion beschichtet. Nach dem Trocknen hatte die Beschichtung ein Gewicht von etwa 65 g/m². Dann wurde das beschichtete textile Flachmaterial auf einer Seite vollflächig in-line bedruckt, um ihm ein Aussehen zu geben, das dem eines Naturdarms ähnelt. Zwei auf entsprechende Breite geschnittene Bahnen des textilen Flachmaterials wurden übereinander gelegt mit den bedruckten Seiten zueinander gewandt. Die Ränder wurden dann vernäht (wobei sich die Naht etwa 2 bis 3 mm vom Rand entfernt befand). Anschließend wurde auf die Außenseite der beiden Textilbahnen jeweils eine 25 µm dicke Folie aus Niederdruck-Polyethylen mit einem Polyurethan-Kleber aufgeklebt und dadurch fest verbunden. Die Breite der Folienbahnen überragte die Breite des textilen Flachmaterials auf jeder Seite um etwa 2 mm. Diese überstehenden Folienränder wurden dann durch Verkleben mit einem Polyurethan-Kleber fettdicht miteinander verbunden. Sodann wurde die Hülle umgestülpt, so daß die genähte wie auch die geklebte Naht nach innen zeigte. Danach wurde die Hülle in Abschnitte von vorbestimmter Länge geschnitten und ein Ende eines jeden Abschnitts mit einem Metallclip verschlossen. Der Metallclip hielt gleichzeitig eine Garnschlaufe zum Aufhängen der Wurst. Die Hülle wurde mit Leberwurst-Brät gefüllt, abgeclipt und heiß geräuchert.

Die fertige Wurst ließ sich problemlos 14 Tage lagern, ohne daß ein Befall mit Mikroorganismen festgestellt wurde oder daß sich das Brät in irgendeiner Weise negativ verändert hatte.

### Beispiel 2:

Beispiel 1 wurde wiederholt mit der einzigen Abweichung, daß man nunmehr eine breiteres textiles Flachmaterial einsetzte, das in Längsrichtung einmal gefaltet wurde. Das gefaltete Material wurde beidseitig vernäht, wobei die Faltkante beim Nähen abgeschnitten wurde. Auf diese Weise konnte besonders einfach sichergestellt werden, daß es nicht zu einer Verschiebung des Druckbilds zwischen der Vorder- und der Rückseite der Wursthülle kommt.

## Patentansprüche

1. Textildarm mit mindestens einer Längsnaht, **dadurch gekennzeichnet, daß** er ein Textilmaterial und eine fettdichte Folie umfaßt, wobei die Folie mit der Innenseite des Textilmaterials derartig flächig verbunden ist, daß sie über die Längsnaht und den Rand des Textilmaterials einen Überstand bildet und im Bereich des Überstands fettdicht verschlossen ist.

2. Textildarm gemäß Anspruch 1, **dadurch gekennzeichnet, daß** die Folie durch Siegeln, Kleben oder Schweißen verschlossen ist.

3. Textildarm gemäß Anspruch 1 oder 2, **dadurch gekennzeichnet, daß** er 2 Längsnähte aufweist.

4. Textildarm gemäß einem oder mehreren der Ansprüche 1 bis 3, **dadurch gekennzeichnet, daß** er ein Gewebe, Gewirke, verfestigtes Vlies oder Spinnvlies aus Naturfaser, synthetischen Fasern oder Gemischen davon umfaßt.

5. Textildarm gemäß Anspruch 4, **dadurch gekennzeichnet, daß** das Gewebe aus Baumwolle und/oder Zellwolle, wobei die Baumwolle und/ oder Zellwolle gegebenenfalls gemischt ist mit synthetischen Fasern, bevorzugt mit Polyester oder Polyamid, besteht.

6. Textildarm gemäß Anspruch 5, **dadurch gekennzeichnet, daß** das Gewebe ein Flächengewicht von 8 bis 300 g/m², bevorzugt 20 bis 150 g/m², besonders bevorzugt 45 bis 120 g/m², aufweist.

7. Textildarm gemäß Anspruch 4, **dadurch gekennzeichnet, daß** das Gewebe, Gewirke, verfestigte Vlies oder Spinnvlies auf einer oder auf beiden Seiten beschichtet oder auf sonstige Weise oberflächenbehandelt ist.

8. Textildarm gemäß Anspruch 7, **dadurch gekennzeichnet, daß** die Folie eine ein- oder mehrschichtige Folie ist, bevorzugt eine verschweißbare oder heißsiegelfähige Folie, besonders bevorzugt eine mono- oder biaxial verstreckte Folie.

9. Textildarm gemäß Anspruch 8, **dadurch gekennzeichnet, daß** die Folie im wesentlichen aus Polefin, bevorzugt aus Polyethylen- oder Polypropylen, aus natürlichen Fasern, bevorzugt aus Kollagen, aus natürlichen hochmolekularen Substanzen, bevorzugt aus Carrageenan, Alginat, Chitosan, Pullulan, Stärke, einem Stärkederivat und/oder Protein aufgebaut ist.

10. Textildarm gemäß einem oder mehreren der Ansprüche 1 bis 9, **dadurch gekennzeichnet, daß** die Folie eine Dicke von 5 bis 200 µm, bevorzugt von 8 bis 50 µm, besonders bevorzugt von 10 bis 30 µm, aufweist.

11. Textildarm gemäß einem oder mehreren der Ansprüche 1 bis 10, **dadurch gekennzeichnet, daß** seine Ränder unregelmäßig konturiert sind und die Form eines Naturdarms nachahmen.

12. Textildarm gemäß einem oder mehreren der Ansprüche 1 bis 11, **dadurch gekennzeichnet, daß** mit seiner Außenseite eine weitere, vorzugsweise transparente Folie verbunden ist.

13. Textildarm gemäß Anspruch 12, **dadurch gekennzeichnet, daß** die auf der Außenseite befindliche Folie bedruckt ist, vorzugsweise auf der dem Textilmaterial zugewandten Seite.

14. Verfahren zur Herstellung eines Textildarms gemäß einem oder mehreren der Ansprüche 1 bis 12 , umfassend die Schritte
a) Bereitstellen eines gegebenenfalls beschichteten textilen Flachmaterials;
b) gegebenenfalls Bedrucken des Flachmaterials;
c) Übereinanderlegen von zwei Bahnen aus dem gegebenenfalls beschichten textilen Flachmaterial, wobei die späteren Außenseiten des erfindungsgemäßen Verbunds aufeinander liegen;
d) Verbinden der Längskanten des textilen Flachmaterials durch eine Naht, vorzugsweise eine genähte Naht;
e) Bereitstellen einer fettdichten Folie;
f) flächiges Verbinden jeweils einer Bahn aus der Folie mit der Ober- und der Unterseite des durch eine Naht verbundenen textilen Flachmaterials; die Folie ragt dabei seitlich über das textile Flachmaterial hinaus;
g) Verbinden der überlappenden Ränder der Folie miteinander;
h) gegebenenfalls Schneiden des erzeugten Verbundmaterials in Abschnitte, wobei ein Abschnitt jeweils einer Wurstlänge entspricht;
i) Wenden der Abschnitte, so daß die Naht nach innen ragt und die Folie sich auf der Innenseite befindet;
j) gegebenenfalls Verschließen eines Endes eines jeden Abschnitts und
k) gegebenenfalls Raffen des Verbundmaterials zu einer Raffraupe.

15. Verwendung des Textildarms gemäß einem oder mehreren der Ansprüche 1 bis 13 als Umhüllung für Roh-, Koch- oder Brühwürste.

## Claims

1. A textile skin having at least one longitudinal seam, wherein it comprises a textile material and a fat-tight film, the film being connected to the inside of the textile material in a two-dimensional manner such that it forms a projection over the longitudinal seam and the edge of the textile material and is closed in a fat-tight manner in the region of the projection.

2. The textile skin as claimed in claim 1, wherein the film is closed by sealing, glueing or welding.

3. The textile skin as claimed in claim 1 or 2, wherein it has two longitudinal seams.

4. The textile skin as claimed in one or more of claims 1 to 3, wherein it comprises a woven fabric, loop-formingly knitted fabric, consolidated nonwoven or spunbonded fabric made of natural fiber, synthetic fibers or mixtures thereof.

5. The textile skin as claimed in claim 4, wherein the woven fabric comprises cotton and/or viscose staple, the cotton and/or viscose staple if appropriate being mixed with synthetic fibers, preferably with polyester or polyamide.

6. The textile skin as claimed in claim 5, wherein the woven fabric has a weight per unit area of 8 to 300 g/m², preferably 20 to 150 g/m², particularly preferably 45 to 120 g/m².

7. The textile skin as claimed in claim 4, wherein the woven fabric, loop-formingly knitted fabric, consolidated nonwoven or spunbonded fabric is coated on one or both sides or is surface-treated in another manner.

8. The textile skin as claimed in claim 7, wherein the film is a single-layered or multi-layered film, preferably a weldable or hot-sealable film, particularly preferably a mono- or biaxially stretched film.

9. The textile skin as claimed in claim 8, wherein the film is essentially made of polyolefin, preferably of polyethylene or polypropylene, of natural fibers, preferably of collagen, of natural high-molecular-weight substances, preferably of carrageenan, alginate, chitosan, pullulan, starch, a starch derivative and/or protein.

10. The textile skin as claimed in one or more of claims 1 to 9, wherein the film has a thickness of 5 to 200 µm, preferably of 8 to 50 µm, particularly preferably of 10 to 30 µm.

11. The textile skin as claimed in one or more of claims 1 to 10, wherein its edges have irregular contours and simulate the shape of a natural skin.

12. The textile skin as claimed in one or more of claims 1 to 11, wherein it is connected by its outside to a further, preferably transparent, film.

13. The textile skin as claimed in claim 12, wherein the film situated on the outside is printed, preferably on the side facing the textile material.

14. A method for producing a textile skin as claimed in one or more of claims 1 to 12, comprising the steps
a) providing an if appropriate coated flat textile material;
b) if appropriate printing the flat material;
c) superimposing two webs of the if appropriate coated flat textile material, the later outsides of the inventive composite lying one over the other;
d) joining the longitudinal edges of the flat textile material by a seam, preferably a stitched seam;
e) providing a fat-tight film;
f) joining in a two-dimensional manner one web each of the film to the upper side and lower side of the flat textile material joined by a seam; the film projects laterally over the flat textile material;
g) joining the overlapping edges of the film to one another;
h) if appropriate cutting the composite material produced into sections, a section in each case corresponding to a sausage length;
i) reversing the sections, so that the seam projects inwards and the film is situated on the inside;
j) if appropriate closing one end of each section and
k) if appropriate shirring the composite material to form a shirred stick.

15. The use of the textile skin as claimed in one or more of claims 1 to 13 as casing for raw sausages, cooked-meat sausages or scalded-emulsion sausages.

## Revendications

1. Boyau textile avec au moins un joint longitudinal, **caractérisé en ce qu'**il comprend un matériau textile et une feuille étanche aux graisses, la feuille étant raccordée à plat à la face interne du matériau textile de manière à former une saillie par-dessus le joint longitudinal et le bord du matériau textile et à être fermée de manière étanche aux graisses dans la zone de la saillie.

2. Boyau textile selon la revendication 1, **caractérisé en ce que** la feuille est fermée par scellage, collage ou soudage.

3. Boyau textile selon la revendication 1 ou 2, **caractérisé en ce qu'**il présente 2 joints longitudinaux.

4. Boyau textile selon une ou plusieurs des revendications 1 à 3, **caractérisé en ce qu'**il comprend un tissu, un tricot, un voile encollé ou un non-tissé en fibres naturelles, en fibres synthétiques ou un de leurs mélanges.

5. Boyau textile selon la revendication 4, **caractérisé en ce que** le tissu est constitué de coton et/ou de fibranne, le coton et/ou la fibranne étant éventuellement mélangé(e)(s) à des fibres synthétiques, de préférence à du polyester ou à du polyamide.

6. Boyau textile selon la revendication 5, **caractérisé en ce que** le tissu présente un grammage de 8 à 300 g/m², de préférence de 20 à 150 g/m², mieux encore de 45 à 120 g/m².

7. Boyau textile selon la revendication 4, **caractérisé en ce que** le tissu, le tricot, le voile encollé ou le non-tissé est revêtu ou traité en surface d'une autre manière sur une face ou sur les deux faces.

8. Boyau textile selon la revendication 7, **caractérisé en ce que** la feuille est une feuille monocouche ou multicouche, de préférence une feuille soudable ou thermoscellable, mieux encore une feuille étirée monoaxialement ou biaxialement.

9. Boyau textile selon la revendication 8, **caractérisé en ce que** la feuille est sensiblement constituée de polyoléfine, de préférence de polyéthylène ou de polypropylène, de fibres naturelles, de préférence de collagène, de substances naturelles de poids moléculaires élevés, de préférence de carraghénane, d'alginate, de chitosane, de pullulane, d'amidon, d'un dérivé d'amidon et/ou de protéines.

10. Boyau textile selon l'une quelconque des revendications 1 à 9, **caractérisé en ce que** la feuille présente une épaisseur de 5 à 200 µm, de préférence de 8 à 50 µm, mieux encore de 10 à 30 µm.

11. Boyau textile selon une ou plusieurs des revendications 1 à 10, **caractérisé en ce que** ses bords présentent des contours irréguliers et imitent la forme d'un boyau naturel.

12. Boyau textile selon une ou plusieurs des revendications 1 à 11, **caractérisé en ce qu'**il est raccordé par sa face externe à une autre feuille, de préférence transparente.

13. Boyau textile selon la revendication 12, **caractérisé en ce que** la feuille se trouvant sur la face externe est imprimée, de préférence sur la face tournée vers le matériau textile.

14. Procédé de fabrication d'un boyau textile selon une ou plusieurs des revendications 1 à 12, comprenant les étapes consistant à :
a) préparer un matériau textile plat éventuellement revêtu ;
b) imprimer éventuellement le matériau plat ;
c) superposer deux bandes de matériau textile plat éventuellement revêtu, les faces externes ultérieures formées du composite de l'invention étant appliquées l'une sur l'autre ;
d) raccorder les arêtes longitudinales du matériau textile plat par un joint, de préférence un joint cousu ;
e) préparer une feuille étanche aux graisses ;
f) raccorder à plat respectivement une bande de la feuille à la face supérieure et à la face inférieure du matériau textile plat raccordé par un joint, la feuille dépassant alors latéralement du matériau textile plat ;
g) raccorder l'un à l'autre les bords de la feuille qui se chevauchent ;
h) couper éventuellement le matériau composite formé en segments, un segment correspondant respectivement à une longueur de saucisse ;
i) retourner les segments de sorte que le joint dépasse vers l'intérieur et que la feuille se trouve sur la face interne ;
j) fermer éventuellement une extrémité de chaque segment ; et
k) contracter éventuellement le matériau composite de manière à obtenir une chenille contractée.

15. Utilisation du boyau textile selon une ou plusieurs des revendications 1 à 13 comme enveloppe pour saucisses crues, saucisses cuites ou saucisses à pocher.
